# EUROPÄISCHE PATENTSCHRIFT

(11) **EP 0 720 525 B1**
(45) Veröffentlichungstag und Bekanntmachung des Hinweises auf die Patenterteilung: **26.11.1997**
(21) Anmeldenummer: 94926708.2
(22) Anmeldetag: 23.09.1994
(51) Int. Cl.: B29C 45/12

(54) **ZWEIFACH-SCHLIESSEINHEIT EINER SPRITZGIESSMASCHINE**
DOUBLE CLOSING UNIT FOR AN INJECTION MOULDING MACHINE
UNITE DE FERMETURE DOUBLE D'UNE PRESSE D'INJECTION

(30) Priorität: 24.09.1993 AT 1926/93; 13.10.1993 AT 2051/93
(43) Veröffentlichungstag der Anmeldung: 10.07.1996
(73) Patentinhaber: ENGEL MASCHINENBAU GESELLSCHAFT MBH, A-4311 Schwertberg (AT)
(72) Erfinder: LAMPL, Alfred, A-4311 Schwertberg (AT); NEUMANN, Peter, A-4311 Schwertberg (AT)
(74) Vertreter: Torggler, Paul, Dr.
(86) Internationale Anmeldenummer: AT9400136
(87) Internationale Veröffentlichungsnummer: WO9508428

(56) Entgegenhaltungen:
- DE-B- 1 282 906
- FR-A- 2 295 832
- US-A- 5 145 353
- PATENT ABSTRACTS OF JAPAN vol. 8, no. 22 (M-272) (1459) 31. Januar 1984 & JP,A,58 183 231 (TOSHIBA KIKAI) 26. Oktober 1983
- PATENT ABSTRACTS OF JAPAN vol. 8, no. 54 (M-282) (1491) 10. März 1984 & JP,A,58 205 743 (TOSHIBA KIKAI) 30. November 1983
- PATENT ABSTRACTS OF JAPAN vol. 12, no. 105 (M-681) (2952) 6. April 1988 & JP,A,62 236 717 (UBE IND LTD) 16. Oktober 1987

## Beschreibung

Die Erfindung bezieht sich auf eine Zweifach-Schließeinheit einer Spritzgießmaschine mit einer ortsfesten Formaufspannplatte und zwei bewegbaren Formaufspannplatten sowie mit hydraulischen Druckkissensystemen, die mit Holmen fest verbunden sind, und Verriegelungseinheiten, mittels denen die bewegbaren Formaufspannplatten mit den Holmen kuppelbar sind, wobei die ortsfeste Formaufspannplatte zwischen den bewegbaren Formaufspannplatten angeordnet ist.

Eine derartige Spritzgießmaschine ist aus der JP-A-58-183231 bekannt.

Bei herkömmlichen Spritzgießmaschinen ist nur ein Schließsystem mit einer ortsfesten und einer bewegbaren Formaufspannplatte vorhanden. In eine derartige Spritzgießmaschine kann jeweils nur ein Werkzeug eingespannt werden. Aus wirtschaftlichen Gründen hat man versucht Schließsysteme zu bauen, in denen zwei Werkzeuge montiert werden können, die entweder gleichzeitig oder abwechselnd mit plastifiziertem Kunststoff gefüllt werden.

Eine derartige Spritzgießmaschine ist in der EP-A1-0 068 596 beschrieben. Bei dieser Schließeinheit ist die ortsfeste Formaufspannplatte an der Stirnseite angeordnet und es ist nur ein hydraulisches System für den Druckaufbau vorhanden. Dadurch ist eine gegenseitige Abhängigkeit des Produktionsablaufes in den beiden Formwerkzeugen gegeben. Das Verteilersystem für den plastifizierten Kunststoff befindet sich einer der bewegbaren Formaufspannplatten, die dadurch eine sehr große Masse aufweist. Bei jedem Bewegungsvorgang wird der Zusammenhang mit der Spritzeinheit unterbrochen.

Die FR-PS 1 304 803 zeigt eine Schließeinheit mit einer mittleren ortsfesten Formplatte und zwei beidseitig dieser ortsfesten Formplatte angeordneten bewegbaren Formaufspannplatten. Es sind zwei weitere äußere Stirnplatten vorgesehen, an denen sich die Hydraulikzylinder, die die bewegbaren Formaufspannplatten beaufschlagen, abstützen. In der Folge weist eine derartige Schließeinheit insgesamt fünf Platten auf.

Aus der DE-A1-33 00 652 ist eine Schließeinheit mit einer mittleren ortsfesten und zwei bewegbaren Formaufspannplatten bekannt, wobei beide Formaufspannplatten über Hochdruckvorschubeinrichtung bewegt werden. Diese Hochdruckvorschubeinrichtung stützt sich an einer zusätzlichen Stirnplatte ab. Diese Spritzgießmaschine weist also insgesamt vier Platten auf und ist daher immer noch relativ aufwendig.

Aus der DE-A1-12 82 906 ist eine Spritzgießmaschine mit zwei ortsfesten Formaufspannplatten bekannt, wobei die Formaufspannplatten durch Holme verbunden sind und auf den Holmen eine zwischen den beiden ortsfesten Formaufspannplatten angeordnete bewegbare Formaufspannplatte verfahrbar ist. Die bewegbare Formaufspannplatte kann jeweils an der einen oder anderen ortsfesten Formaufspannplatte anliegen, so daß die beiden von den Formaufspannplatten getragenen Spritzgießformen alternierend, aber nicht gemeinsam im Einsatz sind.

Aufgabe der Erfindung ist es, eine Zweifach Schließeinheit für eine Spritzgießmaschine zu schaffen, die sich durch einen besonders wirtschaftlichen Aufbau auszeichnet.

Die erfindungsgemäße Aufgabe wird dadurch gelöst, daß die Druckkissensysteme in der ortsfesten Formaufspannplatte angeordnet sind und daß jeder bewegbaren Formaufspannplatte ein von der anderen bewegbaren Formaufspannplatte unabhängiges Druckkissensystem zugeordnet ist.

Durch die erfindungsgemäße Ausführung der Schließeinheit, wobei sich die Druckkissensysteme bzw. die Schnellfahrzylinder an der ortsfesten Formaufspannplatte abstützen, kann auf eine weitere Stirnplatte verzichtet werden. Die Schließeinheit weist nur die drei unbedingt notwendigen Formaufspannplatten auf, sodaß mit einem Minimum an konstruktiven Aufwand gleichzeitig zwei Formwerkzeuge in der Spritzgießmaschine angeordnet sein können.

Bei einer Zweifach-Schließeinheit einer Spritzgießmaschine mit einer ortsfesten Formaufspannplatte und zwei bewegbaren Formaufspannplatten sowie mit hydraulischen Druckkissensystemen, die mit Holmen fest verbunden sind, und Verriegelungseinheiten, mittels denen die bewegbaren Formaufspannplatten mit den Holmen kuppelbar sind, wobei die ortsfeste Formaufspannplatte zwischen den bewegbaren Formaufspannplatten angeordnet ist, und die beiden bewegbaren Formaufspannplatten durch gemeinsame Holme verbunden sind, ist vorgesehen, daß die Holme in ihrer Mitte je einen Druckkissenkolben aufweisen, der sich in einem Druckkissenzylinder in der ortsfesten Formaufspannplatte befindet.

Nachfolgend werden verschiedene Ausführungsbeispiele der Erfindung anhand der Figuren der beiliegenden Zeichnungen eingehend beschrieben.

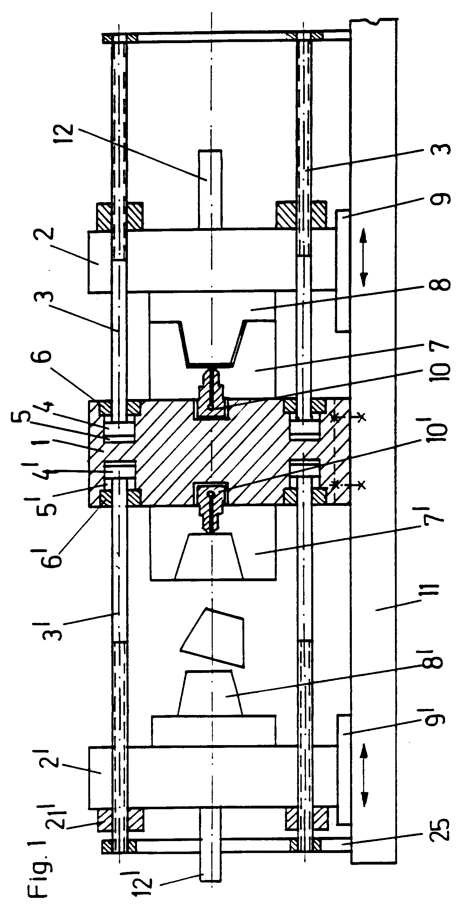

Die Fig. 1 Zeigt eine schematisch eine Ansicht eines Ausführungsbeispieles, wobei ein Werkzeug geschlossen und ein Werkzeug geöffnet ist,
die Fig. 2 zeigt einen Grundriß dieser Schließeinheit mit dem Verteilungssystem für den plastifizierten Kunststoff und dem Verriegelungsmechanismus,
die Fig. 3 zeigt ein Ausführungsbeispiel mit zwei Einspritzaggregaten,
die Fig. 4 zeigt die Anordnung der Schnellfahrzylinder,
die Fig. 5 zeigt schematisch eine Ansicht teilweise im Schnitt durch ein weiteres Ausführungsbeispiel einer erfindungsgemäßen Schließeinheit, wobei ein Werkzeug geschlossen und ein Werkzeug geöffnet ist,
die Fig. 6 zeigt einen Grundriß und die mittlere Formaufspannplatte teilweise im Schnitt,
die Fig. 7 zeigt einen Grundriß teilweise im Schnitt einer Schließeinheit mit zwei Einspritzaggregaten,
die Fig. 8 zeigt eine Stirnansicht einer Formaufspannplatte,
die Fig. 9 zeigt schematisch den Zyklusablauf in den beiden Formen,
die Fig. 10 und 11 zeigen jeweils schematisch gehaltene Seitenansichten eines weiteren Ausführungsbeispieles einer erfindungsgemäßen Schließeinheit, wobei jeweils eine Form geschlossen und eine Form geöffnet gezeigt ist und
die Fig. 12 zeigt eine Seitenansicht dieses Ausführungsbeispieles, wobei beide Formen geschlossen sind.

Die mittlere ortsfeste Formaufspannplatte 1 ist mit dem Maschinenrahmen 11 starr verbunden. Die bewegbaren Formaufspannplatten 2, 2' stützen sich über Gleitschuhe 9, 9' auf dem Maschinenrahmen 11 ab und werden mit Schnellfahrzylindern 17, 19 und 18, 20 bewegt (der Begriff Schnellfahrzylinder bezieht sich jeweils auf die Kolben-Zylindereinheit). Vorteilhaft ist der Maschinenrahmen 11 mit Schienen 26 versehen, auf denen die Gleitschuhe 9 verfahrbar sind.

Bei geschlossenen Werkzeughälften 7, 8 werden mit den Verriegelungszylindern 23, 24 bzw. 23', 24' die geteilten Verriegelungsbacken 21, 22 eingefahren und greifen in umlaufende Nuten an den Holmen 3, 3' ein.

Wird auf der Stangenseite im Zylinder 5, 5' des Druckkissens ein Druck aufgebaut, wird über den Kolben 4, 4' der Holm 3, 3', die Verriegelungsbacken 21, 22 bzw. 21', 22' und die bewegbare Formaufspannplatte 2, 2' die Schließkraft aufgebaut.

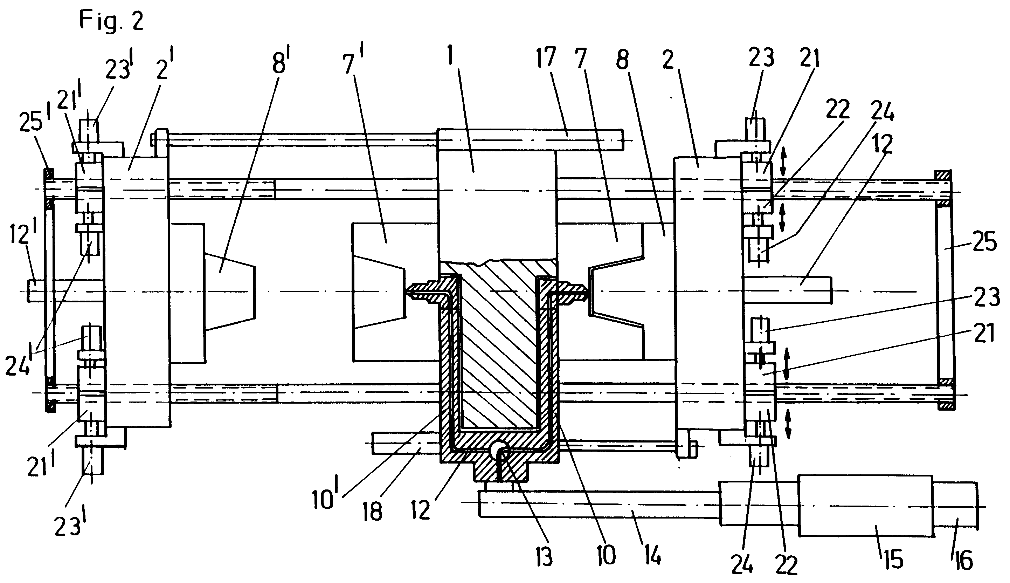

Mit der Einspritzeinheit bestehend aus einem Massezylinder 14, einem Einspritzzylinder 15 und einem Antriebsmotor 16 wird plastifizierter Kunststoff über das Verteilersystem 12, 10, 10' in das Werkzeug 7, 8 bzw. 7', 8' eingespritzt. Der Massestrom wird im Ausführungsbeispiel nach der Fig. 2 über das Verteilerküken 13 umgelenkt. Bei einem derartigen Einspritzaggregat muß für das gleichzeitige Einspritzen von Kunststoffmaterial in beide Werkzeuge das Verteilerküken 13 gewechselt werden.

Zum Öffnen der Werkzeuge 7, 8 bzw. 7', 8' werden die Verriegelungsbacken 21, 22 bzw. 21', 22' mit den Verriegelungszylindern 23, 24 bzw. 23', 24' ausgefahren und die bewegbare Formaufspannplatte 2, 2' wird mit den Schnellfahrzylindern 18, 20 und 17, 19 verschoben.

Die Entformung des Spritzlinges kann mit dem Auswerferzylinder 12, 12' erfolgen.

Die Schnellfahrzylinder 18, 20 und 17, 19 sind diagonal bei jeder bewegbaren Formaufspannplatte angeordnet. Die Holme 3, 3' werden mit Distanzlaschen 25, 25' in Position gehalten.

Die Zylinder 5, 5' der Druckkissen werden auf der Holmseite von Büchsen 6, 6' verschlossen.

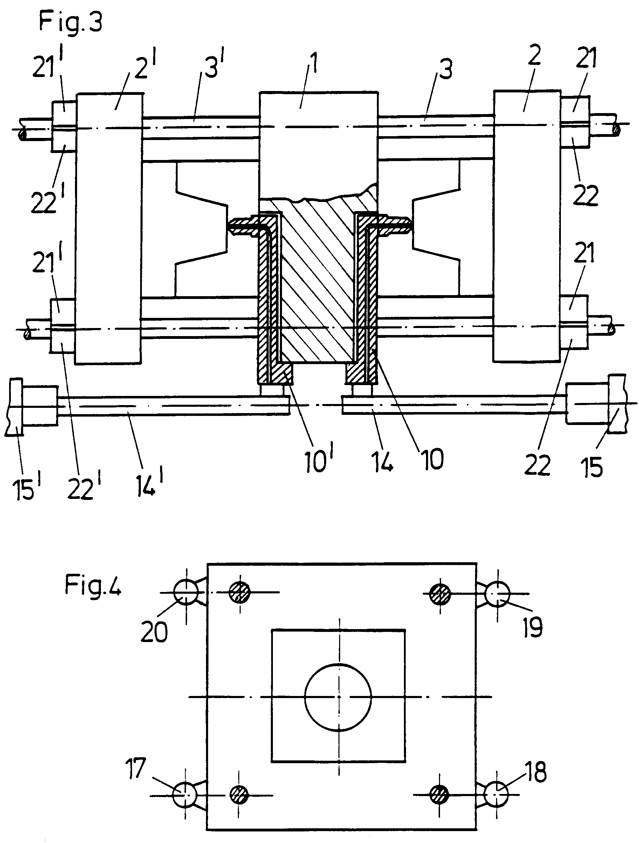

In manchen Fällen kann es zweckmäßig sein, zwei getrennte Spritzaggregate 14, 15, 16 bzw. 14', 15', 16', wie in der Fig. 3 gezeigt, anzuordnen.

Bei einem derartigen Ausführungsbeispiel einer Zweifach Schließeinheit ist die unabhängige Produktion von Spritzlingen mit den Werkzeugen 7, 8 und 7', 8' möglich. Die Spritzgießmaschine kann optimal an die jeweiligen Produktionsverhältnisse angepaßt werden.

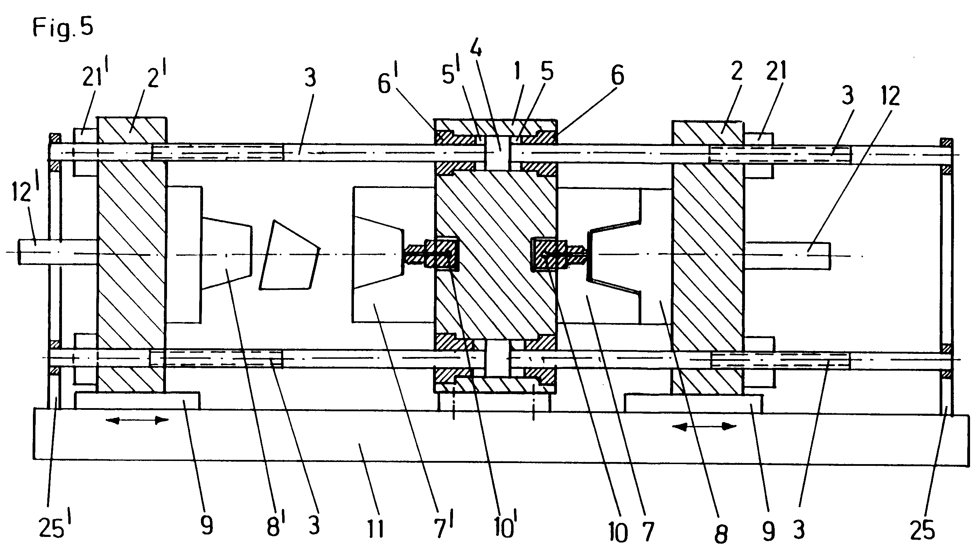

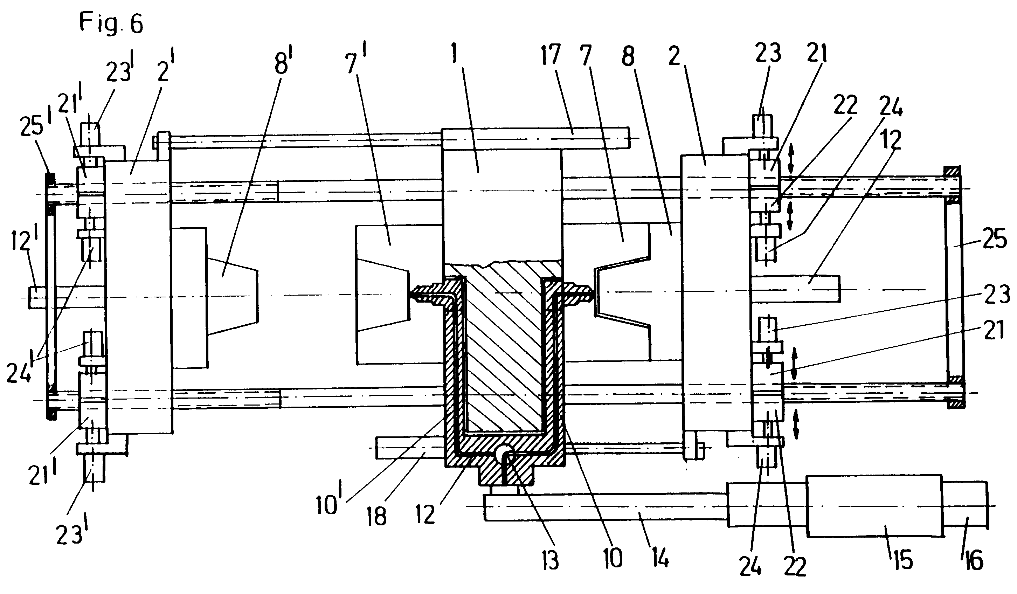

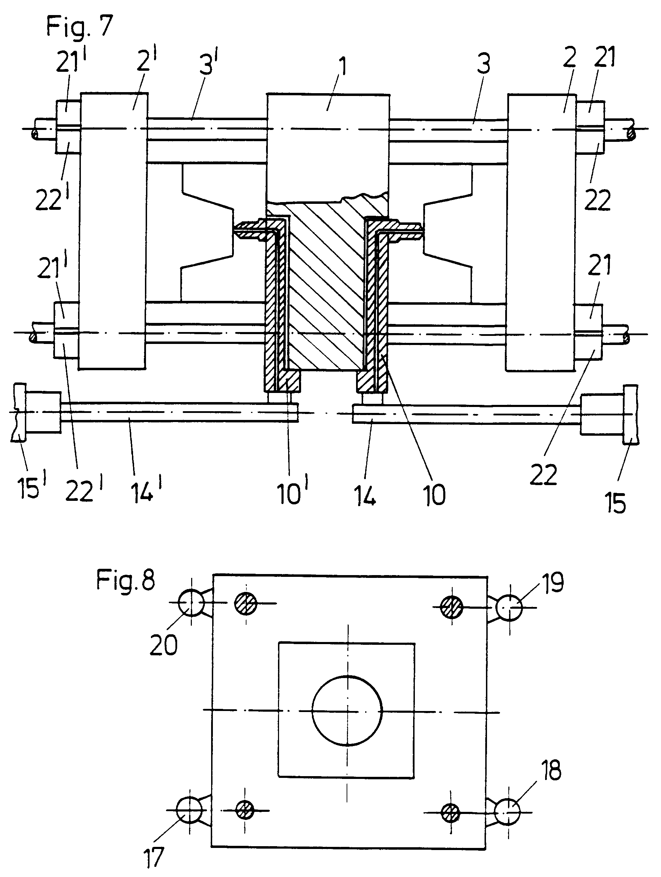

Im Ausführungsbeispielen nach den Fig. 5 bis 9 ist die mittlere Formaufspannplatte 1 wiederum starr mit den Maschinenrahmen 11 verbunden. Die bewegbaren Formaufspannplatten 2, 2' stützen sich wiederum über Gleitschuhe 9, 9' auf dem Maschinenrahmen 11 ab und werden mit den Schnellfahrzylinder 18, 20 bewegt. Bei geschlossenen Formhälften 7, 8 werden mit den Verriegelungszylindern 23, 24 die Verriegelungsbacken geschlossen und rasten über umlaufende Nuten an den Holmen 3 ein.

Wird in den Druckkissen auf einer Seite des Kolbens 4 im Zylinder 5, 5' ein Druck aufgebaut, wird über den Kolben 4 die Holme 3, die Verriegelungsbacken 21, 22 und die bewegbare Formaufspannplatte 2, 2' die Schließkraft aufgebaut.

Mit einer Schließeinheit gemäß dem Ausführungsbeispiel nach den Fig. 5 bis 9 kann der Druckaufbau jeweils nur an einer Seite der ortsfesten Formaufspannplatte 1 erfolgen.

Mit der Einspritzeinheit bestehend aus dem Massezylinder 14, einem Einspritzzylinder 15 und einem Antriebsmotor 16 wird plastifizierter Kunststoff über das Verteilersystem 10 in das jeweilige Werkzeug 7, 8 eingespritzt.

Während des Einspritzvorganges und der folgenden Abkühlzeit für das Werkzeug 7, 8 wird das Werkzeug 7', 8' geöffnet. Die Verriegelungsbacken 21', 22' werden geöffnet und mit den Schnellfahrzylindern 17, 19 wird die bewegbare Formaufspannplatte 2' ausgefahren.

Während dieser Zeit ist im Zylinder 5' der Hydraulikdruck abgebaut. Nach dem Öffnen des Werkzeuges 7', 8' wird mit dem Auswerferzylinder 12' das Spritzgußteil entformt und die bewegbare Formaufspannplatte 2' wird mittels der Schnellfahrzylinder 17, 19 wieder geschlossen. Nun kann der im Massezylinder 14 vordosierte Kunststoff in das Werkzeug 7', 8' eingespritzt werden und im Werkzeug 7', 8' beginnt die Kühlzeit für das Spritzgußteil.

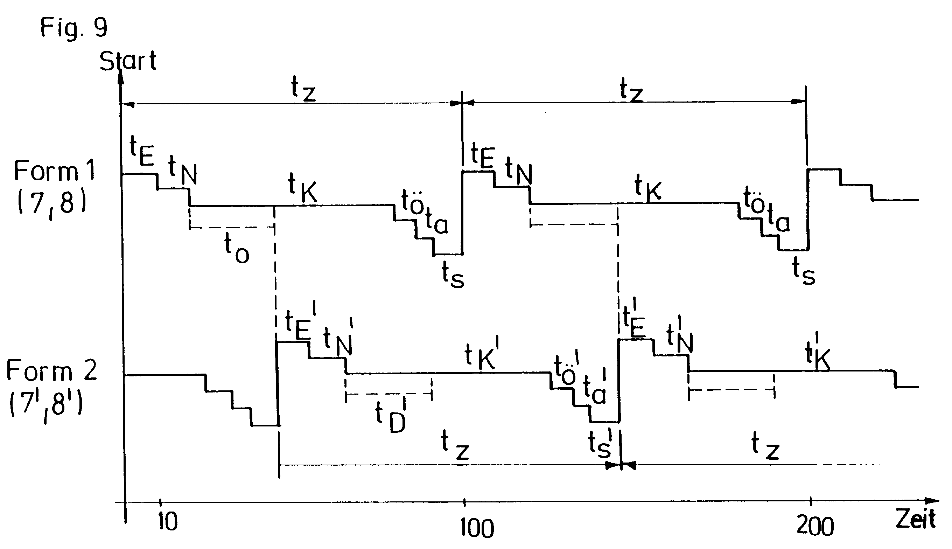

Wenn die Kühlung im Werkzeug 7, 8 abgeschlossen ist, kann das Werkzeug 7, 8 geöffnet werden und der Betriebsvorgang wiederholt an der anderen Seite der ortsfesten Formaufspannplatte 1. Der Zyklusablauf der beiden Werkzeuge 7, 8 und 7', 8' ist in der Fig. 9 gezeigt.

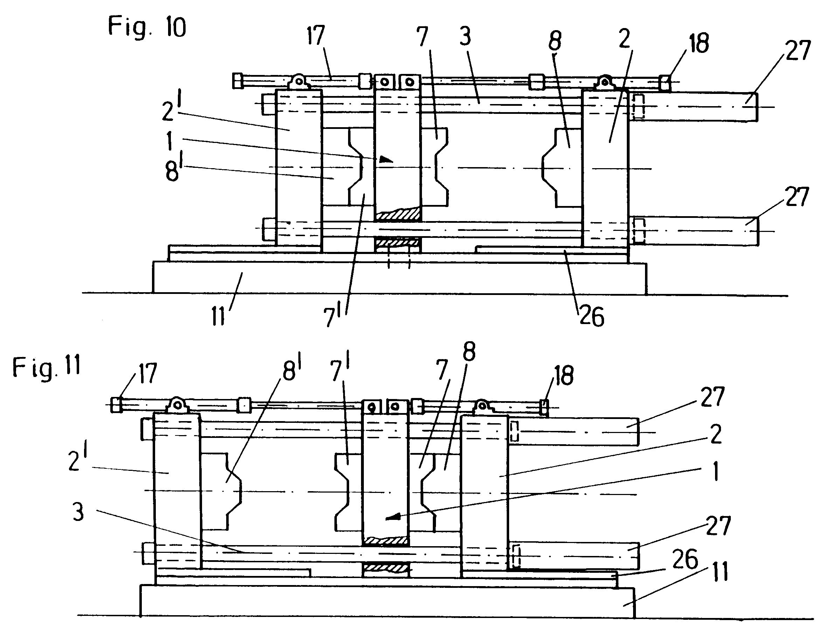

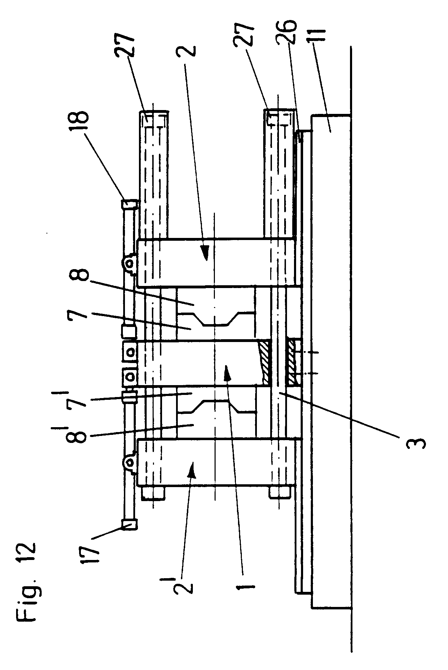

Im Ausführungsbeispiel nach den Fig. 10 bis 12 ist wiederum die mittlere ortsfeste Formaufspannplatte 1 starr mit dem Maschinenrahmen 11 verbunden, während die beiden bewegbaren Formaufspannplatten 2, 2' auf Schienen 26 verfahrbar sind.

Diese Schließeinheit erlaubt drei verschiedene Stellungen der bewegbaren Formaufspannplatten 2, 2'. Entweder ist das linke Formwerkzeug 7', 8', wie in der Fig. 10 gezeigt, geschlossen und das rechte Formwerkzeug 7, 8 geöffnet oder umgekehrt oder es sind beide Formwerkzeuge 7, 8, 7', 8' geschlossen.

Während ein Formwerkzeug, beispielsweise das Werkzeug 7, 8 geöffnet wird, wird das andere Formwerkzeug 7', 8' mittels der Schnellfahrzylinder 17, 19 in der Schließstellung gehalten, wodurch sich ein eigener Verriegelungsmechanismus erübrigt. Die Zuhaltekraft der Schnellfahrzylinder 17, 18, 19, 20 muß daher größer sein als die Öffnungskraft der Schnellfahrzylinder 17, 18, 19, 20.

Im Ausführungsbeispiel nach den Fig. 10, 11, 12 sind die Druckkissenzylinder 27 an der bewegbaren Formaufspannplatte 2 angeordnet und die beiden Formaufspannplatten 2, 2' über die Holme 3 verbunden.

## Patentansprüche

1. Zweifach-Schließeinheit einer Spritzgießmaschine mit einer ortsfesten Formaufspannplatte (1) und zwei bewegbaren Formaufspannplatten (2, 2') sowie mit hydraulischen Druckkissensystemen (4, 4', 5, 5'), die mit Holmen (3, 3') fest verbunden sind, und Verriegelungseinheiten, mittels denen die bewegbaren Formaufspannplatten (2, 2') mit den Holmen (3, 3') kuppelbar sind, wobei die ortsfeste Formaufspannplatte (1) zwischen den bewegbaren Formaufspannplatten (2, 2') angeordnet ist, dadurch gekennzeichnet, daß die Druckkissensysteme (4, 4', 5, 5') in der ortsfesten Formaufspannplatte (1) angeordnet sind und daß jeder bewegbaren Formaufspannplatte (2, 2') ein von der anderen bewegbaren Formaufspannplatte (2, 2') unabhängiges Druckkissensystem (4, 4', 5, 5') zugeordnet ist.

2. Zweifach Schließeinheit nach Anspruch 1, dadurch gekennzeichnet, daß, während eine der bewegbaren Formaufspannplatten (2, 2') geöffnet, die andere bewegbare Formaufspannplatte (2, 2') von mindestens einem, vorzugsweise zwei Schnellfahrzylindern (17, 18, 19, 20) in der Schließstellung gehalten wird.

3. Zweifach Schließeinheit nach Anspruch 1 oder 2, dadurch gekennzeichnet, daß sich sowohl die Zylinder (5) und Kolben (4) der Druckkissensysteme (4, 5) als auch ein Verteilersystem (10) mit Einspritzdüsen für den plastifizierten Kunststoff innerhalb der ortsfesten Formaufspannplatte (1) befinden.

4. Zweifach-Schließeinheit nach Anspruch 1, wobei in der ortsfesten Formaufspannplatte zwei Einspritzkanäle vorgesehen sind, die zu zwei Einspritzdüsen an einander entgegengesetzten Seiten der ortsfesten Formaufspannplatte führen, dadurch gekennzeichnet, daß die beiden Einspritzkanäle (10, 10') an einen gemeinsamen Plastifizierzylinder (14) angeschlossen sind und daß zwischen den Einspritzkanälen (10, 10') in dem Plastifizierzylinder (14) ein Verteilerküken (13) angeordnet ist.

5. Zweifach-Schließeinheit einer Spritzgießmaschine mit einer ortsfesten Formaufspannplatte (1) und zwei bewegbaren Formaufspannplatten (2, 2') sowie mit hydraulischen Druckkissensystemen (4, 4', 5, 5'), die mit Holmen (3, 3') fest verbunden sind, und Verriegelungseinheiten, mittels denen die bewegbaren Formaufspannplatten (2, 2') mit den Holmen (3, 3') kuppelbar sind, wobei die ortsfeste Formaufspannplatte (1) zwischen den bewegbaren Formaufspannplatten (2, 2') angeordnet ist, und die beiden bewegbaren Formaufspannplatten (2, 2') durch gemeinsame Holme (3) verbunden sind, dadurch gekennzeichnet, daß die Holme (3) in ihrer Mitte je einen Druckkissenkolben (4) aufweisen, der sich in einem Druckkissenzylinder (5) in der ortsfesten Formaufspannplatte (1) befindet.

6. Zweifach Schließeinheit nach Anspruch 5, dadurch gekennzeichnet, daß die Zylinder (5) der Druckkissen von zwei einander gegenüberliegenden Büchsen (6) begrenzt werden.

7. Zweifach Schließeinheit nach einem der Ansprüche 1 bis 6, dadurch gekennzeichnet, daß an den bewegbaren Formaufspannplatten (2, 2') Verriegelungsbacken (21, 21') angeordnet sind, die die bewegbaren Formaufspannplatten (2, 2') wahlweise mit den Holmen (3, 3') verriegeln.

8. Zweifach Schließeinheit nach Anspruch 3, dadurch gekennzeichnet, daß die Einspritzdüsen an den Stirnseiten der ortsfesten Formaufspannplatte (1) angeordnet sind, während das Einspritzaggregat (15) oder die Einspritzaggregate (15) an der Seite der Formaufspannplatte (1) an diese andockt bzw. andocken.

9. Zweifach Schließeinheit nach einem der Ansprüche 1 bis 8, dadurch gekennzeichnet, daß das Einspritzaggregat (15) bzw. die Einspritzaggregate (15) ständig mit dem Verteilersystem (10) in der ortsfesten Formaufspannplatte (1) in Verbindung steht bzw. stehen.

10. Zweifach Schließeinheit nach Anspruch 2, dadurch gekennzeichnet, daß die Druckkissenzylinder (27) an einer der bewegbaren Formaufspannplatten (2) montiert sind.

11. Zweifach Schließeinheit nach einem der Ansprüche 1 bis 10, dadurch gekennzeichnet, daß die mittlere ortsfeste Formaufspannplatte (1) mit einem Maschinenrahmen (11) starr verbunden ist, der Schienen (26) aufweist, auf denen die bewegbaren Formaufspannplatten (2, 2') verfahrbar sind.

## Claims

1. Double closing unit of an injection moulding machine with a stationary mould mounting plate (1) and two movable mould mounting plates (2, 2') and with hydraulic pressure cushion systems (4, 4', 5, 5') which are fixedly connected to bar members (3, 3'), and locking units by means of which the movable mould mounting plates (2, 2') can be coupled to the bar members (3, 3'), wherein the stationary mould mounting plate (1) is arranged between the movable mould mounting plates (2, 2'), characterised in that the pressure cushion systems (4, 4', 5, 5') are arranged in the stationary mould mounting plate (1) and that associated with each movable mould mounting plate (2, 2') is a pressure cushion system (4, 4', 5, 5') which is independent of the other movable mould mounting plate (2, 2').

2. Double closing unit as set forth in claim 1 characterised in that while one of the movable mould mounting plates (2, 2') is open the other movable mould mounting plate (2, 2') is held in the closed position by at least one and preferably two fast-motion cylinders (17, 18, 19, 20).

3. Double closing unit as set forth in claim 1 or claim 2 characterised in that both the cylinders (5) and pistons (4) of the pressure cushion systems (4, 5) and also a distributor system (4, 5) and also a distributor system (10) with injection nozzles for the plasticised plastic material are disposed within the stationary mould mounting plate (1).

4. Double closing unit as set forth in claim 1 wherein provided in the stationary mould mounting plate are two injection passages which lead to two injection nozzles at mutually opposite sides of the stationary mould mounting plate, characterised in that the two injection passages (10, 10') are connected to a common plasticiser cylinder (14) and that a distributor switching valve (13) is arranged between the injection passages (10, 10') in the plasticiser cylinder (14).

5. Double closing unit of an injection moulding machine with a stationary mould mounting plate (1) and two movable mould mounting plates (2, 2') and with hydraulic pressure cushion systems (4, 4', 5, 5') which are fixedly connected to bar members (3, 3'), and locking units by means of which the movable mould mounting plates (2, 2') can be coupled to the bar members (3, 3'), wherein the stationary mould mounting plate (1) is arranged between the movable mould mounting plates (2, 2'), and the two movable mould mounting plates (2, 2') are connected by common bar members (3), characterised in that in their middle the bar members (3) have a respective pressure cushion piston (4) which is disposed in a pressure cushion cylinder (5) in the stationary mould mounting plate (1).

6. Double closing unit as set forth in claim 5 characterised in that the cylinders (5) of the pressure cushions are delimited by two mutually oppositely disposed bushes (6).

7. Double closing unit as set forth in one of claims 1 through 6 characterised in that arranged on the movable mould mounting plates (2, 2') are locking jaws (21, 21') which selectively lock the movable mould mounting plates (2, 2') to the bar members (3, 3').

8. Double closing unit as set forth in claim 3 characterised in that the injection nozzles are arranged at the faces of the stationary mould mounting plate (1) while the injection assembly (15) or the injection assemblies (15) docks or dock at the side of the mould mounting plate (1) to same.

9. Double closing unit as set forth in one of claims 1 through 8 characterised in that the injection assembly (15) or the injection assemblies (15) is or are in constant communication with the distributor system (10) in the stationary mould mounting plate (1).

10. Double closing unit as set forth in claim 2 characterised in that the pressure cushion cylinders (27) are mounted on one of the movable mould mounting plates (2).

11. Double closing unit as set forth in one of claims 1 through 10 characterised in that the middle stationary mould mounting plate (1) is rigidly connected to a machine frame (11) having rails (26) on which the movable mould mounting plates (2, 2') are movable.

## Revendications

1. Double groupe de fermeture d'une presse à mouler par injection comportant un plateau porte-moule (1) fixe, deux plateaux porte-moule (2, 2') mobiles et deux systèmes de coussin de pression hydrauliques (4, 4', 5, 5') qui sont assemblés de manière fixe par des montants (3, 3'), ainsi que des unités de verrouillage à l'aide desquelles les plateaux porte-moule mobiles (2, 2') peuvent être couplés aux montants (3, 3'), le plateau porte-moule (1) fixe étant disposé entre les plateaux porte-moule (2, 2') mobiles, caractérisé en ce que les systèmes de coussins de pression (4, 4', 5, 5') sont disposés dans le plateau porte-moule (1) fixe et en ce qu'à chaque porte-moule (2, 2') mobile est affecté un système de coussin de pression (4, 4', 5, 5') indépendant de l'autre plateau porte-moule mobile (2, 2').

2. Double groupe de fermeture selon la revendication 1, caractérisé en ce que pendant que l'un des plateaux porte-moule (2, 2') mobiles est ouvert, l'autre plateau porte-moule (2, 2') mobile est maintenu en position de fermeture par au moins un, de préférence deux cylindres à marche rapide (17, 18, 19, 20).

3. Double groupe de fermeture selon la revendication 1 ou la revendication 2, caractérisé en ce que les cylindres (5) et pistons (4) des systèmes de coussins de pression (4, 5) aussi bien qu'un système de distribution (10) avec des injecteurs pour la matière synthétique plastifiée se trouvent à l'intérieur du plateau porte-moule fixe (1).

4. Double groupe de fermeture selon la revendication 1, dans lequel sont prévus dans le plateau porte-moule fixe, deux canaux d'injection qui conduisent à deux injecteurs disposés sur des côtés opposés l'un à l'autre du plateau porte-moule fixe, caractérisé en ce que les deux canaux d'injection (10, 10') sont reliés à un cylindre commun de plastification (14) et en ce qu'un boisseau de distribution (13) est disposé entre les canaux d'injections (10, 10') dans le cylindre de plastification (14).

5. Double groupe de fermeture d'une presse à mouler par injection comportant un plateau porte-moule (1) fixe, deux plateaux porte-moule (2, 2') mobiles et deux systèmes de coussin de pression hydrauliques (4, 4', 5, 5') qui sont assemblés de manière fixe par des montants (3, 3'), ainsi que des unités de verrouillage à l'aide desquelles les plateaux porte-moule mobiles (2, 2') peuvent être couplés aux montants (3, 3'), le plateau porte-moule (1) fixe étant disposé entre les plateaux porte-moule (2, 2') mobiles et les deux plateaux porte-moule (2, 2') mobiles étant assemblés par des montants communs (3), caractérisé en ce que les montants (3) présentent respectivement en leur centre, un piston pour le coussin de pression (4) qui se trouve dans un cylindre du coussin de pression (5) dans le plateau porte-moule (1) fixe.

6. Double groupe de fermeture selon la revendication 5, caractérisé en ce que les cylindres (5) des coussins de pression sont limités par deux chemises (6) opposées l'une à l'autre.

7. Double groupe de fermeture selon l'une quelconque des revendications 1 à 6, caractérisé en ce que sur les plateaux porte-moule mobiles (2, 2') sont disposées des mâchoires de verrouillage (21, 21') qui verrouillent les plateaux porte-moule (2, 2') mobiles au choix avec les montants (3, 3').

8. Double groupe de fermeture selon la revendication 3, caractérisé en ce que les injecteurs sont disposés sur les faces du plateau porte-moule (1) fixe tandis que le groupe d'injection (15) ou les groupes d'injection (15) s'amarre ou s'amarrent sur le côté du plateau porte-moule (1).

9. Double groupe de fermeture selon l'une quelconque des revendications 1 à 8, caractérisé en ce que le groupe d'injection (15) ou les groupes d'injection (15) est ou sont relié/s en permanence avec le système de distribution (10) dans le plateau porte-moule (1) fixe.

10. Double groupe de fermeture selon la revendication 2, caractérisé en ce que les cylindres des coussins de pression (27) sont montés sur l'un des plateaux porte-moule (2) mobiles.

11. Double groupe de fermeture selon l'une quelconque des revendications 1 à 10, caractérisé en ce que le plateau porte-moule (1) fixe central est assemblé de manière fixe avec un bâti de machine (11) qui présente des rails (26) sur lesquels les plateaux porte-moule (2, 2') peuvent se déplacer.
